(19) Europäisches Patentamt
European Patent Office
Office européen des brevets

(11) **EP 3 220 181 B1**

(12) **FASCICULE DE BREVET EUROPEEN**

(45) Date de publication et mention de la délivrance du brevet:
**14.02.2024 Bulletin 2024/07**

(21) Numéro de dépôt: **17158946.8**

(22) Date de dépôt: **02.03.2017**

(51) Classification Internationale des Brevets (IPC):
**G02B 17/02** (2006.01)  **H01Q 15/16** (2006.01)
**H01Q 19/12** (2006.01)  **H01Q 19/15** (2006.01)
**G02B 27/00** (2006.01)

(52) Classification Coopérative des Brevets (CPC):
**G02B 27/0012; G02B 17/02; H01Q 15/16; H01Q 19/15**

(54) **SYSTEME OPTIQUE HYBRIDE A ENCOMBREMENT REDUIT POUR ANTENNE RESEAU IMAGEUR**

HYBRIDES OPTISCHES SYSTEM MIT REDUZIERTER GRÖSSE FÜR ABBILDUNGSGRUPPENANTENNE

HYBRID OPTICAL SYSTEM WITH REDUCED SIZE FOR IMAGING ARRAY ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2016 FR 1600450**

(43) Date de publication de la demande:
**20.09.2017 Bulletin 2017/38**

(73) Titulaire: **THALES**
**92190 Meudon (FR)**

(72) Inventeurs:
• **GIRARD, Etienne**
**31830 PLAISANCE DU TOUCH (FR)**
• **FONSECA, Nelson**
**NOORDWIJK (NL)**
• **LEGAY, Hervé**
**31830 PLAISANCE DU TOUCH (FR)**

(74) Mandataire: **Atout PI Laplace**
**Immeuble "Visium"**
**22, avenue Aristide Briand**
**94117 Arcueil Cedex (FR)**

(56) Documents cités:
**US-A- 4 618 867    US-A- 5 202 700
US-A1- 2010 060 521**

• **A.S. DUNBAR: "Calculation of Doubly Curved Reflectors for Shaped Beams", PROCEEDINGS OF THE IRE, vol. 36, no. 10, 1 octobre 1948 (1948-10-01), pages 1289-1296, XP055326398, US ISSN: 0096-8390, DOI: 10.1109/JRPROC.1948.231938**
• **TAYLOR T T: "Design of line-source antennas for narrow beamwidth and low side lobes", TRANSACTIONS OF THE IRE PROFESSIONAL GROUP ON ANTENNAS AND PROPAGATION, IEEE, PISCATAWAY, NJ, USA, vol. 3, no. 1, 1 janvier 1955 (1955-01-01) , pages 16-28, XP011348899, DOI: 10.1109/TPGAP.1955.5720407**

**Description**

La présente invention concerne un système optique hybride à encombrement réduit pour une antenne réseau imageur. Elle s'applique au domaine des télécommunications par satellite, pour une antenne bord ou une antenne sol comportant un ou plusieurs réflecteurs, et en particulier aux antennes multifaisceaux et aux antennes à balayage.

Dans les satellites de télécommunications, le système optique des antennes, constitué par un ou plusieurs réflecteurs, est généralement illuminé par un réseau de sources (en anglais feed array), les réflecteurs étant destinés à élargir l'ouverture rayonnante de l'antenne sans en accroître la complexité et d'améliorer ainsi la directivité des faisceaux engendrés par le réseau de sources pour répondre aux besoins croissants des télécommunications à haut débit. La plupart des réflecteurs ont un profil à courbure parabolique et le réseau de sources est placé dans le plan focal d'un réflecteur de l'antenne.

Pour des applications nécessitant une flexibilité de la mission de l'antenne, pour modifier par exemple la zone géographique à couvrir, les antennes reconfigurables sont traditionnellement réalisées avec des réseaux phasés planaires actifs (en anglais : planar phased array) qui sont préférés aux réseaux de sources généralement utilisés pour des antennes à couvertures fixes. Cependant, pour des applications de télécommunications par satellite, des gains élevés sont exigés mais sont impossibles à obtenir avec un seul réseau phasé de taille raisonnable au regard de la complexité et du poids. Il est alors connu de combiner le réseau phasé avec une configuration d'antenne de type système imageur qui permet de magnifier le rayonnement du réseau phasé. Un premier type de système imageur connu est constitué d'un seul réflecteur et du réseau phasé positionné dans une position défocalisée devant le réflecteur. Alternativement, un deuxième type de système imageur connu est constitué de deux réflecteurs paraboliques confocaux, respectivement principal et secondaire, de diamètres et de longueurs focales différents, le réseau phasé primaire étant alors placé dans le plan focal du réflecteur secondaire dont le diamètre est le plus faible. Le système imageur à un réflecteur ou à deux réflecteurs paraboliques confocaux permet de magnifier l'ouverture primaire, définie par le réseau phasé primaire, en une ouverture secondaire de plus grande dimension, selon deux axes orthogonaux.

Dans le cas d'un système imageur comportant un seul réflecteur, le rapport de magnification est égal au rapport de la distance de défocalisation sur la distance focale. Dans le cas d'un système imageur à deux réflecteurs confocaux, le rapport de magnification est égal au rapport des longueurs focales des deux réflecteurs paraboliques. Ce rapport de magnification doit rester faible, classiquement entre trois et sept, pour maintenir des performances acceptables en dépointage et une limitation des niveaux des lobes secondaires. Cette architecture permet d'utiliser un réseau rayonnant primaire de taille réduite, la taille de l'ouverture totale de l'antenne étant définie par la taille du réflecteur principal dont le diamètre est le plus grand et est égale au produit du rapport de magnification par la taille du réseau phasé. Cependant, cette architecture d'antenne nécessite de placer le centre du réseau phasé en un point précis, appelé point conjugué, correspondant au point de convergence de tous les rayons passant par le centre du réflecteur principal puis réfléchis par le réflecteur secondaire. Cette contrainte d'aménagement du réseau phasé primaire ne laisse aucun degré de liberté.

Il existe un autre type d'antenne plus simple et plus compacte dans lequel le réseau phasé planaire est remplacé par une ouverture rayonnante linéaire, très allongée, placée dans le plan focal d'un réflecteur cylindro-parabolique. Le réflecteur cylindro-parabolique comporte une courbure cylindrique selon un premier axe du réflecteur et un contour parabolique selon un deuxième axe, orthogonal au premier axe du réflecteur. L'ouverture rayonnante linéaire peut être alimentée par un ou plusieurs cornets élémentaires et permet d'élaborer de façon simple, dans un unique plan contenant l'ouverture rayonnante, un ou plusieurs faisceaux alignés selon un axe. L'ouverture rayonnante linéaire peut par exemple être réalisée par un formateur de faisceaux quasi-optique à lentille ou de type pillbox, ou comporter un formateur de faisceaux numérique couplé à un élément rayonnant linéaire continu ou à plusieurs éléments rayonnants discrets alignés, ou comporter des déphaseurs couplés à un élément rayonnant linéaire continu ou à plusieurs éléments rayonnants discrets alignés. Cependant le réflecteur cylindro-parabolique ne permet de focaliser les faisceaux que selon une seule dimension de l'espace et permet d'élargir l'ouverture linéaire selon un seul axe correspondant à l'axe du contour parabolique du réflecteur, le facteur de magnification selon l'axe orthogonal au contour parabolique étant figé et égal à un. En outre, cette configuration d'antenne lie l'augmentation du rapport de magnification selon l'axe parabolique du réflecteur à l'augmentation de la taille de l'ouverture totale de l'antenne. D'autres antennes conventionnelles sont divulguées dans US 4 618 867 A, US 5 202 700 A et US 2010/060521 A1.

Le but de l'invention est de remédier aux inconvénients des antennes connues et de réaliser un système optique d'antenne à encombrement réduit, permettant de convertir une ouverture rayonnante primaire longiligne ayant des dimensions réduites en une ouverture rayonnante bi-dimensionnelle de plus grandes dimensions. Plus précisément, le but de l'invention est de réaliser un système optique, dit hybride, présentant d'une part, des propriétés de magnification des faisceaux selon un premier axe de rayonnement et d'autre part, des propriétés de focalisation des faisceaux selon un deuxième axe de rayonnement perpendiculaire au premier axe, le système optique hybride présentant en outre l'avantage, de permettre le contrôle du rapport de magnification sans qu'il soit nécessaire d'augmenter la taille de l'ouverture totale de l'antenne.

Pour cela, selon l'invention, un système optique d'antenne est défini dans la revendication indépendante 1.

Avantageusement, dans le premier plan contenant l'ouverture rayonnante primaire, l'ouverture rayonnante primaire peut être placée dans une position d'offset par rapport au premier réflecteur, et dans le second plan central $\Pi_0$, perpendiculaire au premier plan contenant l'ouverture rayonnante primaire, l'ouverture rayonnante primaire peut être placée dans un plan de symétrie du premier réflecteur.

Alternativement, dans le premier plan contenant l'ouverture rayonnante primaire, l'ouverture rayonnante primaire peut être placée dans un plan de symétrie du premier réflecteur, et dans le second plan central $\Pi_0$, perpendiculaire au premier plan contenant l'ouverture rayonnante primaire, l'ouverture rayonnante primaire peut être placée dans une position d'offset par rapport au premier réflecteur.

Selon un premier mode de réalisation, la première courbure du premier réflecteur dans le premier plan contenant l'ouverture rayonnante primaire peut être une première courbure parabolique ayant un foyer correspondant au premier foyer, la deuxième courbure du premier réflecteur dans le deuxième plan central $\Pi_0$ perpendiculaire au premier plan contenant l'ouverture rayonnante primaire, est alors issue de l'intersection du deuxième plan central $\Pi_0$ et d'un premier paraboloïde de révolution ayant un foyer correspondant au deuxième foyer, et les différentes courbures du premier réflecteur dans les différents plans $\Pi_\theta$ perpendiculaires au premier plan contenant l'ouverture rayonnante primaire et coupant l'ouverture rayonnante primaire aux différents points d'intersection respectifs, sont issues de l'intersection des différents plans $\Pi_\theta$ et de différents paraboloïdes de révolution ayant chacun un foyer correspondant aux différents foyers respectifs.

Avantageusement, le système optique hybride peut comporter en outre un deuxième réflecteur illuminé par le premier réflecteur, les premier et deuxième réflecteurs étant confocaux, et, dans le premier plan contenant l'ouverture rayonnante primaire, dans le second plan $\Pi_0$ et dans chaque plan $\Pi_\theta$ perpendiculaire au premier plan contenant l'ouverture rayonnante primaire, le premier réflecteur comporte en outre un troisième foyer, le troisième foyer étant un foyer commun au premier réflecteur et au deuxième réflecteur.

Selon un deuxième mode de réalisation de l'invention, la première courbure du premier réflecteur est une première courbure elliptique ayant deux foyers correspondant respectivement au premier foyer et au troisième foyer, la deuxième courbure du premier réflecteur est issue de l'intersection du deuxième plan central $\Pi_0$ et d'un premier ellipsoïde de révolution ayant deux foyers correspondant respectivement au deuxième foyer et au troisième foyer, et les différentes courbures du premier réflecteur dans les différents plans $\Pi_\theta$ perpendiculaires au premier plan contenant l'ouverture rayonnante primaire et coupant l'ouverture rayonnante primaire aux différents points d'intersection respectifs, sont issues de l'intersection des différents plans $\Pi_\theta$ et de différents ellipsoïdes de révolution ayant deux foyers correspondant respectivement au troisième foyer et aux différents foyers respectifs.

Avantageusement, les différentes courbures du premier réflecteur dans le premier plan contenant l'ouverture rayonnante primaire, dans le second plan perpendiculaire au premier plan contenant l'ouverture rayonnante primaire et dans les différents plans $\Pi_\theta$ perpendiculaires au premier plan contenant l'ouverture rayonnante primaire et coupant l'ouverture rayonnante primaire aux différents points d'intersection respectifs, sont respectivement une courbure hyperbolique et une courbure obtenue de l'intersection des différents plans $\Pi_\theta$ et de différents hyperboloïdes de révolution ayant deux foyers correspondant respectivement au troisième foyer et aux différents foyers respectifs.

Avantageusement, l'ouverture rayonnante primaire peut avoir une forme linéaire ou une forme en arc de cercle ayant un centre correspondant au premier foyer.

Avantageusement, le système optique hybride peut comporter en outre un dispositif de déphasage couplé à l'ouverture rayonnante primaire.

Avantageusement, le système optique hybride peut comporter en outre un formateur de faisceaux quasi-optique planaire constitué d'une ligne de transmission à deux plaques métalliques parallèles, le formateur de faisceaux quasi-optique comportant une ouverture d'extrémité terminale formant l'ouverture rayonnante primaire.

Avantageusement, le dispositif de déphasage peut être constitué d'une lentille intégrée entre les deux plaques métalliques parallèles d'un formateur de faisceaux quasi-optique.

D'autres particularités et avantages de l'invention apparaîtront clairement dans la suite de la description donnée à titre d'exemple purement illustratif et non limitatif, en référence aux dessins schématiques annexés qui représentent :

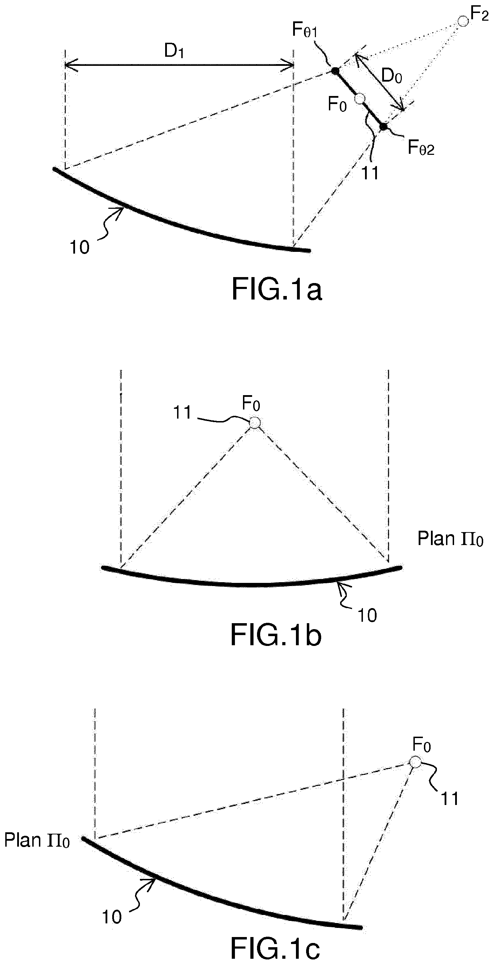

- figures 1a et 1b : deux schémas en coupe, d'un premier exemple de configuration, respectivement dans un premier plan contenant une ouverture rayonnante primaire longiligne et dans un second plan central $\Pi_0$ perpendiculaire au premier plan et passant par le centre F0 de l'ouverture rayonnante primaire, d'un système optique hybride comportant un seul réflecteur, selon l'invention ;

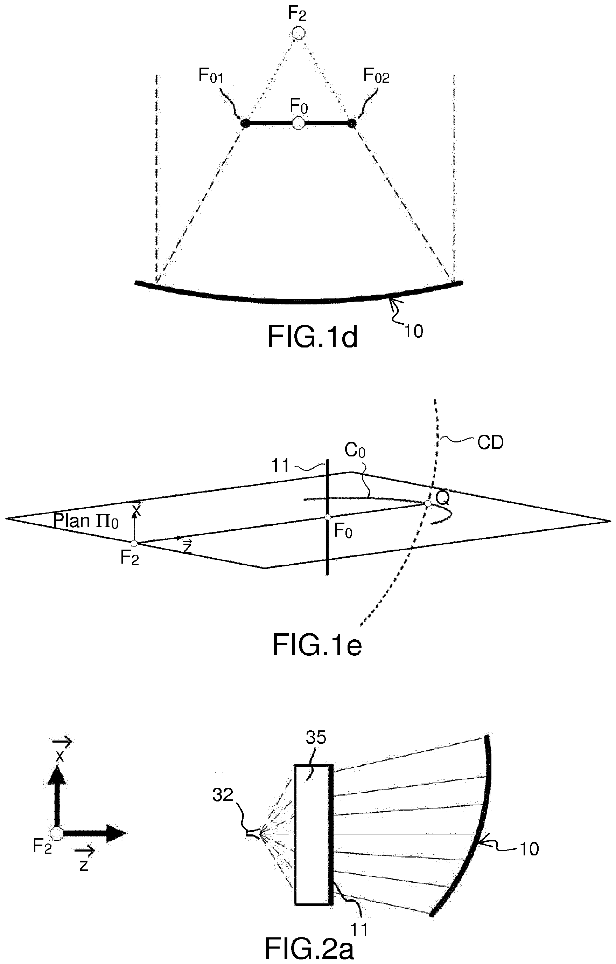

- figures 1c et 1d : deux schémas en coupe, d'un deuxième exemple de configuration, respectivement dans un premier plan central $\Pi_0$ passant par le centre F0 d'une ouverture rayonnante primaire, d'un système optique hybride comportant un seul réflecteur et dans un second plan perpendiculaire au premier plan et contenant l'ouverture rayonnante primaire longiligne, selon l'invention ;
- figure 1e : un schéma illustrant la disposition de la deuxième courbure du premier réflecteur, dans le second plan central $\Pi_0$, orthogonal au premier plan contenant l'ouverture rayonnante primaire et passant par les foyers F2 et F0, par rapport à la première courbure du premier réflecteur, selon l'invention ;

- figure 2a : un schéma en coupe, dans le premier plan de la figure 1a, d'un exemple de système optique hybride comportant un dispositif de déphasage couplé à l'ouverture rayonnante primaire, selon l'invention ;

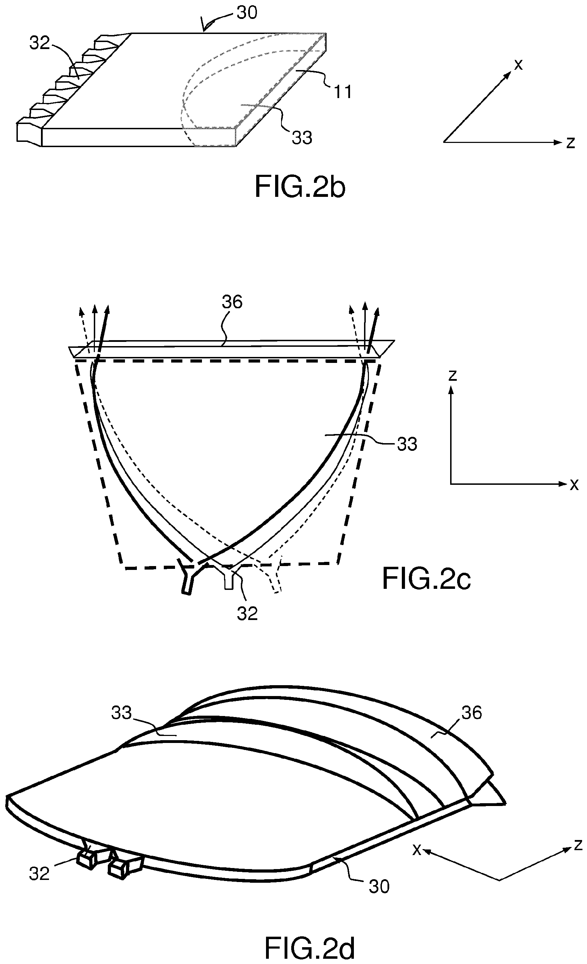

- figures 2b, 2c, 2d : trois schémas, respectivement en perspective pour les figures 2b et 2d et en vue de dessus pour la figure 2c, illustrant des exemples de différents dispositifs de déphasage constitués de formateurs de faisceaux quasi-optiques planaires pouvant être utilisés dans le système optique hybride, selon l'invention ;

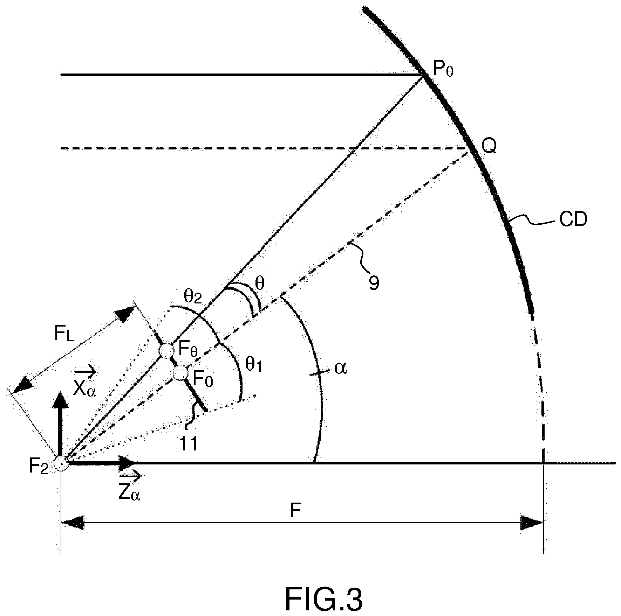

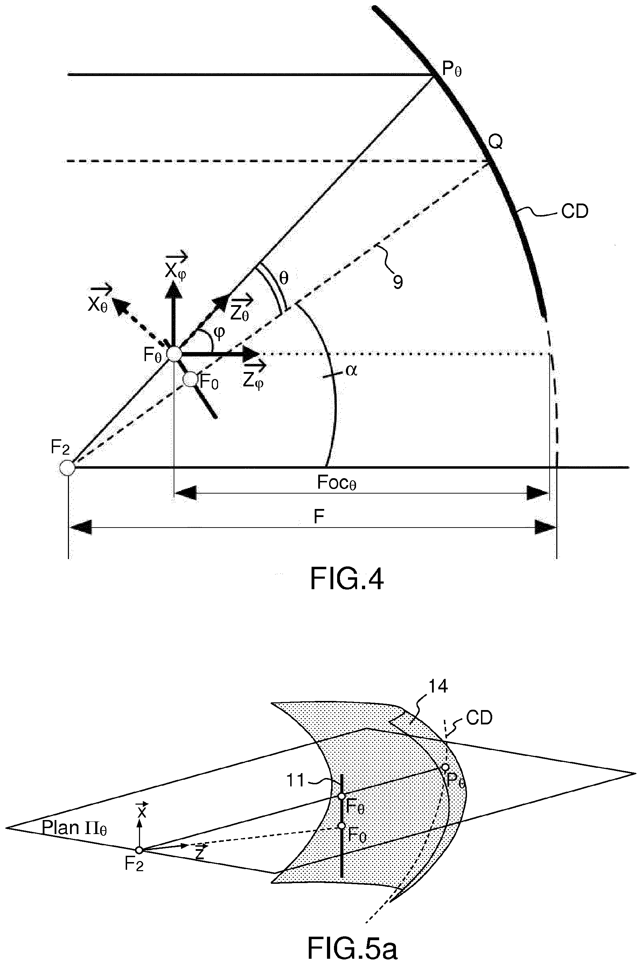

- figures 3 et 4 : deux schémas en coupe, selon le premier plan contenant l'ouverture rayonnante primaire longiligne, du système optique hybride de la figure 1a, dans lesquels sont respectivement choisis un repère d'origine F2, et différents repères d'origine Fθ, selon l'invention ;

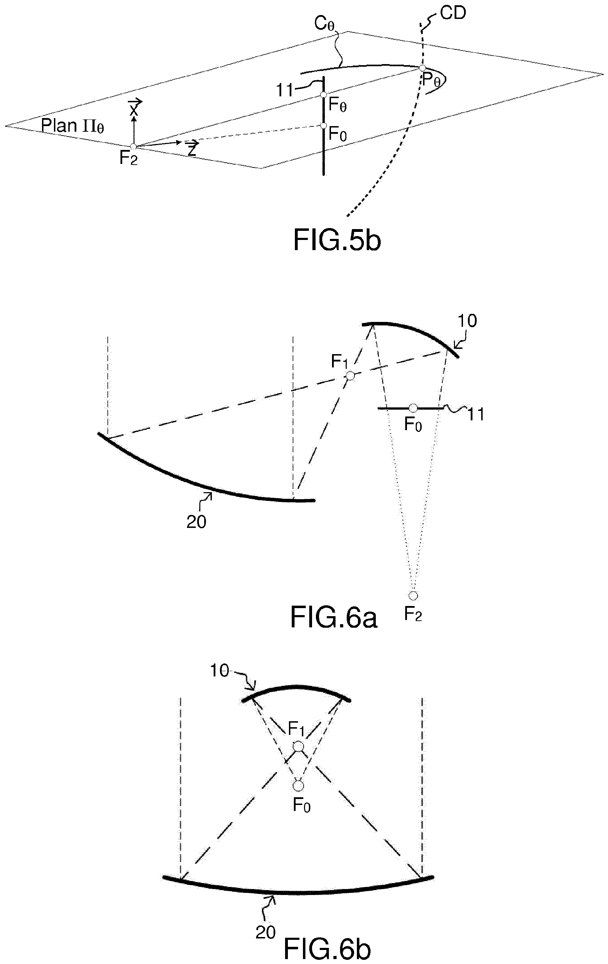

- figures 5a et 5b : deux schémas illustrant respectivement un exemple de paraboloïde de révolution et un exemple de la courbure $C_\theta$ du premier réflecteur, dans un plan $\Pi_\theta$ orthogonal au premier plan contenant l'ouverture rayonnante primaire, la courbure $C_\theta$ étant située à l'intersection du paraboloïde de révolution et du plan $\Pi_\theta$, selon l'invention ;
- figures 6a et 6b : deux schémas en coupe, d'un troisième exemple de configuration, respectivement dans un premier plan contenant une ouverture rayonnante primaire longiligne et dans un second plan perpendiculaire au premier plan, d'un système optique hybride comportant deux réflecteurs confocaux, le premier réflecteur comportant des courbures elliptiques, selon l'invention ;

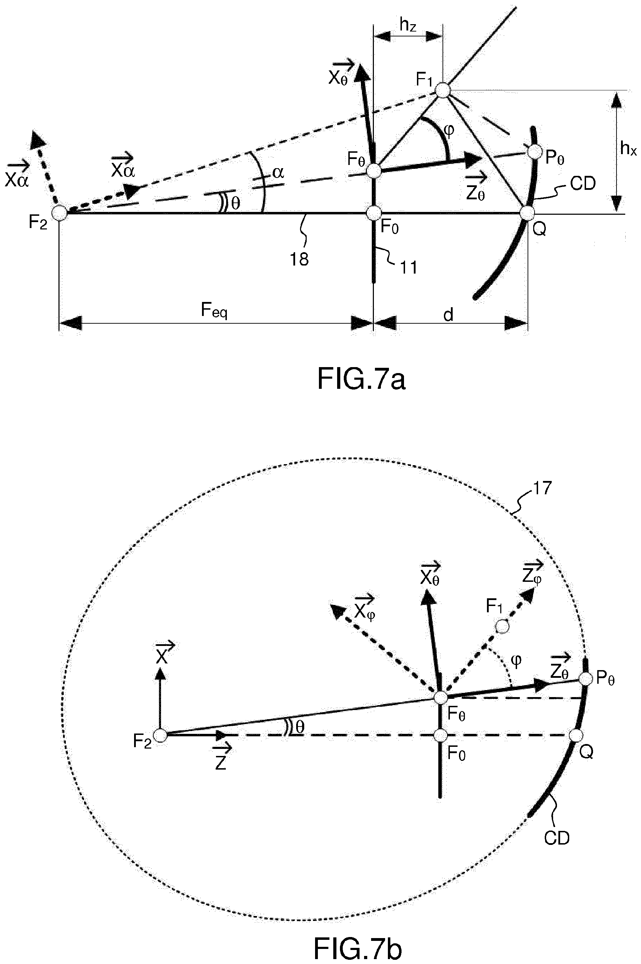

- figures 7a et 7b : deux schémas en coupe, selon le premier plan contenant l'ouverture rayonnante primaire longiligne, du système optique hybride de la figure 6a, dans lesquels sont respectivement choisis un repère d'origine F2, et différents repères d'origine Fθ, selon l'invention ;

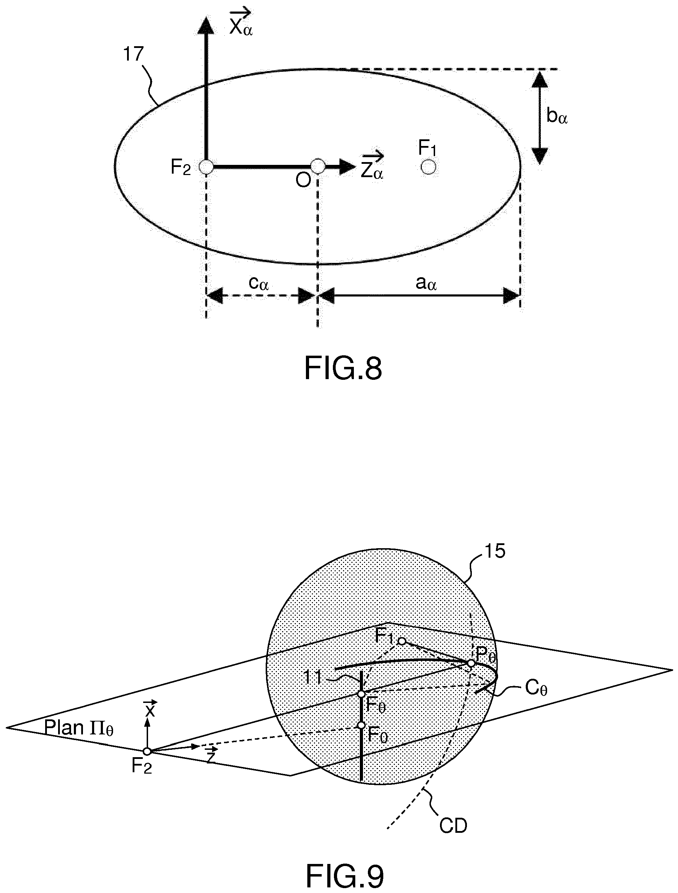

- figure 8 : un schéma dans le premier plan, illustrant les différents paramètres de l'ellipse de foyers F2 et F1 dans le repère d'origine F2, selon l'invention ;
- figure 9 : un schéma illustrant, pour un point Fθ de l'ouverture rayonnante primaire longiligne, l'ellipsoïde de révolution de foyers Fθ et F1, tangent en un point Pθ à l'ellipse de foyers F2 et F1, selon l'invention ;

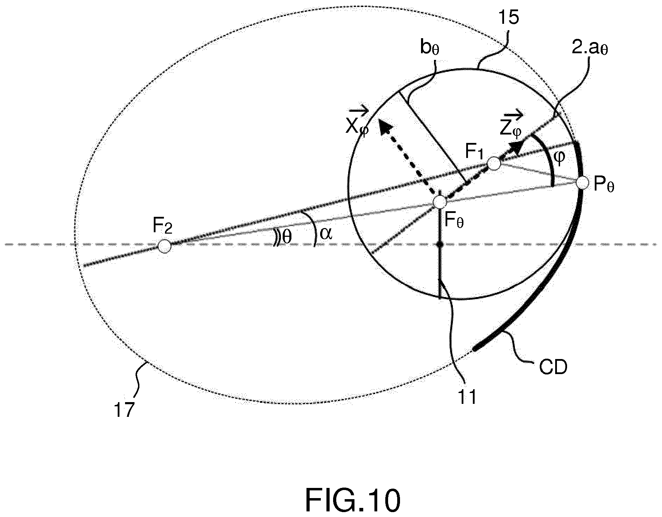

- figure 10 : un schéma en coupe dans le premier plan, illustrant l'ellipse de foyers F2 et F1 et l'ellipsoïde de révolution de foyers F1 et Fθ et passant par le point Pθ du premier réflecteur, selon l'invention ;

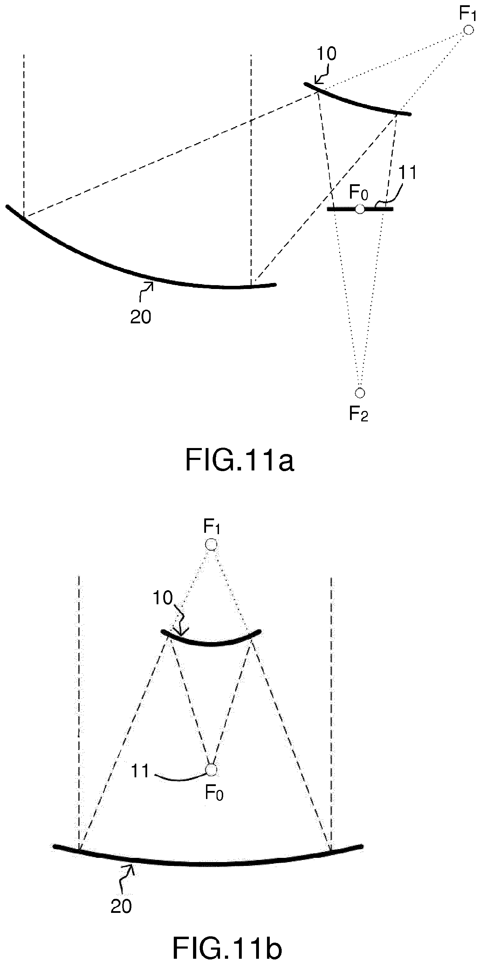

- figures 11a et 11b : deux schémas en coupe, d'un quatrième exemple de configuration, respectivement dans un premier plan contenant une ouverture rayonnante primaire longiligne et dans un second plan perpendiculaire au premier plan, d'un système optique hybride comportant deux réflecteurs confocaux, le premier réflecteur comportant des courbures hyperboliques, selon l'invention.

Selon l'invention, le système optique hybride, imageur selon un premier axe et focalisant selon un deuxième axe orthogonal au premier axe, peut comporter un seul réflecteur ou deux réflecteurs confocaux, selon le rapport de magnification souhaité. Une configuration à deux réflecteurs confocaux est plus complexe et plus volumineuse mais permet d'obtenir un rapport de magnification plus grand qu'avec un seul réflecteur.

Les figures 1a, 1b et 1e illustrent, selon deux plans de coupe orthogonaux, un premier exemple de configuration d'un système optique hybride, imageur selon un premier axe et focalisant selon un deuxième axe orthogonal au premier axe, selon un premier mode de réalisation de l'invention. Le système optique hybride comporte un premier réflecteur 10 et une ouverture rayonnante primaire 11 illuminant le premier réflecteur. L'ouverture rayonnante primaire 11 est de forme longiligne, sa longueur d'ouverture DO selon une direction X, étant beaucoup plus grande que sa largeur. L'ouverture rayonnante primaire 11 est destinée à émettre un front d'onde, plan ou cylindrique, dans une direction Z orthogonale à la direction X, vers le premier réflecteur 10, et peut avoir un profil de forme curviligne quelconque, par exemple linéaire ou en arc de cercle, délimité par deux extrémités opposées Fθ1 et Fθ2. La figure 1a correspond à un premier plan de coupe XZ contenant l'ouverture rayonnante primaire longiligne et la figure 1b, correspond à un deuxième plan de coupe central $\Pi_0$, orthogonal au premier plan contenant l'ouverture rayonnante primaire 11 et coupant l'ouverture rayonnante primaire en un premier point d'intersection situé en un point central de l'ouverture rayonnante primaire. Sur la figure 1a, le premier plan contenant l'ouverture rayonnante primaire longiligne correspond à un plan d'offset du système optique hybride et sur la figure 1b, le deuxième plan central, perpendiculaire au premier plan contenant l'ouverture rayonnante primaire, correspond à un plan de symétrie du système optique hybride, mais alternativement, comme représenté sur la configuration illustrée sur les figures 1c et 1d, il est également possible d'avoir la configuration inverse et de placer l'ouverture rayonnante primaire longiligne dans le plan de symétrie.

Conformément à l'invention, comme représenté par exemple sur la figure 1e, le premier réflecteur 10 comporte deux courbures différentes selon deux plans orthogonaux, respectivement un premier plan XZ contenant l'ouverture rayonnante primaire et un deuxième plan central $\Pi_0$ orthogonal au premier plan et passant par le centre F0 de l'ouverture rayonnante primaire 11. Dans le premier plan XZ contenant l'ouverture rayonnante primaire, le premier réflecteur 10 comporte une première courbure CD, dite courbure directrice, représentée en traits pointillés, ayant un premier foyer F2, situé dans le premier plan, en arrière de l'ouverture rayonnante primaire 11, l'arrière étant défini par rapport au sens de rayonnement de l'ouverture rayonnante, le premier réflecteur 10 étant situé devant l'ouverture rayonnante primaire. Le premier foyer F2 est donc virtuel et la distance entre le premier foyer F2 et le premier réflecteur 10 est supérieure à la distance entre l'ouverture rayonnante primaire 11 et le premier réflecteur 10. Dans le second plan central $\Pi_0$, perpendiculaire au plan de l'ouverture rayonnante primaire et passant par le centre de l'ouverture rayonnante primaire, le premier réflecteur 10 comporte une deuxième courbure CO ayant un deuxième foyer F0 situé au centre de l'ouverture rayonnante primaire 11. Comme représenté sur la figure 1e, les deux foyers F2 et FO du premier réflecteur sont donc situés dans le premier plan XZ contenant l'ouverture rayonnante primaire 11 et sont alignés selon la direction Z, sur une droite focale 9, référencée sur la figure 3, passant par le centre F0 de l'ouverture rayonnante primaire longiligne 11 et par le centre Q du premier réflecteur 10. La distance entre le premier foyer F2 et le centre Q du premier réflecteur est supérieure à la distance entre le deuxième foyer F0 et ledit centre Q.

Dans le premier plan contenant l'ouverture rayonnante primaire, la position du foyer F2 du premier réflecteur 10 étant située en arrière de l'ouverture primaire longiligne 11, une onde incidente rayonnée par l'ouverture primaire longiligne 11 est réfléchie par la première courbure du premier réflecteur 10 qui engendre une onde plane magnifiée c'est-à-dire que l'ouverture rayonnante totale du système optique hybride, en sortie du premier réflecteur, a une dimension D1 égale à la dimension de l'ouverture rayonnante primaire DO multipliée par le rapport de magnification M1, tel que M1= D1/DO.

Dans le second plan central $\Pi_0$, la position du foyer F0 du premier réflecteur 10 est située sur l'ouverture rayonnante primaire 11 qui, dans ce premier plan central, a une dimension négligeable par rapport à sa longueur. L'onde émise par l'ouverture rayonnante est donc un front d'onde circulaire centré en F0 dans le second plan central $\Pi_0$. Dans ce second plan central $\Pi_0$, le réflecteur 10 réfléchit un rayon issu du foyer F0 dans une direction parallèle à l'axe de symétrie, ou axe focal, de la deuxième courbure CO définie dans ce second plan central.

Comme représenté sur l'exemple de réalisation de la figure 2a, l'ouverture rayonnante primaire 11 peut être alimentée par une, ou plusieurs sources d'alimentation 32, et peut être couplée à un dispositif de déphasage 35 afin d'appliquer, entre les deux extrémités opposées F$\theta$1 et F$\theta$2 de l'ouverture rayonnante longiligne, une loi de phase permettant d'élaborer, ou de modifier, le front d'onde émis par l'ouverture rayonnante primaire. Le dispositif de déphasage 35 peut, par exemple, être constitué par un formateur de faisceaux numérique ou comporter des déphaseurs discrets ou des lignes à retards. Alternativement, pour obtenir un ensemble plus compact, comme représenté sur les figures 2b, 2c, 2d, la source d'alimentation 32, ou les sources d'alimentation, et le dispositif de déphasage 35 peuvent être intégrés dans un formateur de faisceaux quasi-optique planaire 30, l'ouverture d'extrémité terminale du formateur de faisceaux quasi-optique formant l'ouverture rayonnante primaire longiligne 11. Deux aménagements sont alors possibles selon l'application envisagée. Dans le cas d'une application à une antenne active, pour minimiser la complexité de cette antenne active le formateur de faisceaux quasi-optique peut être réalisé en technologie SIW (Substrate Integrated Waveguide). Dans ce mode de réalisation, des amplificateurs et éventuellement des déphaseurs peuvent être intégrés au niveau de l'ouverture rayonnante primaire pour affiner le pointage réalisé par le formateur de faisceaux quasi-optique. Dans ce mode de réalisation, il y a un partage de la puissance, également appelé amplification distribuée, pour les faisceaux réalisés par l'ouverture rayonnante primaire.

Dans le cas d'une application à une antenne passive, le formateur de faisceaux quasi-optique est une ligne de transmission sans pertes, délimitée par deux plaques métalliques parallèles entre elles et alimentée, à l'une de ses deux extrémités, par au moins une source d'alimentation 32. Dans ce mode de réalisation, en utilisant plusieurs sources d'alimentation, plusieurs faisceaux peuvent ainsi être réalisés sans dégradations liées aux aberrations.

Lorsque le dispositif de déphasage 35 est intégré entre les deux plaques parallèles du formateur de faisceaux quasi-optique 30, le dispositif de déphasage peut, par exemple, être constitué par une lentille 33 ou un réflecteur. La lentille 33 peut être par exemple une lentille optique comme représenté sur la figure 2b, ou une lentille à gradient d'indice comme représenté sur la figure 2c, ou une lentille métallique à retards comme représenté sur la figure 2d. Alternativement, le formateur de faisceaux quasi-optique peut intégrer un réflecteur et est alors appelé formateur de faisceaux Pillbox. Comme représenté sur les figures 2c et 2d, l'ouverture rayonnante primaire 11 peut, par exemple, être associée à un élément rayonnant longiligne à profil continu 36 ayant un profil curviligne de forme quelconque, par exemple linéaire ou en arc de cercle, ou être constituée de plusieurs éléments rayonnants discrets alignés selon un profil curviligne.

Toutes les sources d'alimentation 32 d'un formateur de faisceaux quasi-optique sont situées dans un seul plan, ce qui permet de former une seule ligne de faisceaux. Bien entendu, il est possible d'empiler plusieurs formateurs de faisceaux identiques, conformes à l'invention, pour former plusieurs lignes de faisceaux différentes. Ainsi en empilant plusieurs ouvertures rayonnantes longilignes, chaque ouverture longiligne va réaliser une ligne de faisceaux dans un plan, chaque ligne de faisceaux étant dépointée par rapport aux autres lignes de faisceaux, dans la direction de l'empilement.

Le premier réflecteur 10 du système optique peut comporter uniquement deux courbures différentes selon les deux plans orthogonaux XY et $\Pi_0$, comme décrit ci-dessus en liaison avec les figures 1a, 1b, 1c, 1d, 1e. Alternativement, pour éviter que des aberrations apparaissent lorsque les rayons sont issus de différents points F$\theta$ localisés sur l'ouverture rayonnante primaire 11, entre les deux extrémités opposées F$\theta$1, F$\theta$2, de l'ouverture rayonnante primaire, mais distants du centre F0, avantageusement, selon l'invention, dans différents plans $\Pi_\theta$ perpendiculaires au premier plan contenant l'ouverture rayonnante primaire 11, chaque plan $\Pi_\theta$ passant par le foyer F2 et par l'un des différents points F$\theta$ respectif,

le premier réflecteur 10 peut comporter différentes courbures Cθ, chaque courbure Cθ ayant un foyer Fθ dédié. Chaque courbure Cθ est définie par une courbe située à l'intersection entre le plan $\Pi_\theta$ et l'ouverture rayonnante primaire 11, chaque plan $\Pi_\theta$ étant un plan passant par le premier foyer F2, faisant un angle θ par rapport au second plan central $\Pi_0$ et coupant l'ouverture rayonnante primaire 11 au foyer Fθ, comme représenté sur les figures 5a et 5b, dans lesquelles la première courbure directrice CD du premier réflecteur 10 dans le premier plan est représentée en traits pointillés. Les différents plans $\Pi_\theta$ perpendiculaires au premier plan XZ contenant l'ouverture rayonnante primaire correspondent à différentes valeurs de l'angle θ et sont donc décalés angulairement les uns des autres. Chaque plan $\Pi_\theta$ est obtenu par une rotation du second plan central $\Pi_0$, d'un angle θ autour du foyer F2, la rotation pouvant être réalisée de part et d'autre du second plan central $\Pi_0$. Les différentes valeurs de l'angle θ sont comprises entre deux valeurs θ1 et θ2 correspondant respectivement aux angles entre le second plan central $\Pi_0$ et les deux plans $\Pi_{\theta1}$ et $\Pi_{\theta2}$, perpendiculaires au plan contenant l'ouverture rayonnante primaire 11 et passant respectivement par les deux extrémités opposées $F_{\theta1}$ et $F_{\theta2}$ de l'ouverture rayonnante primaire 11.

Dans le cas où le système optique hybride comporte un seul réflecteur, comme illustré sur les figures 1a et 1b, ou alternativement sur les figures 1c et 1d, la première courbure CD du premier réflecteur 10 dans le premier plan XZ contenant l'ouverture rayonnante primaire 11 est une courbure parabolique de foyer F2, et les différentes courbures CO, Cθ du premier réflecteur 10, dans le second plan central $\Pi_0$ et dans les différents plans $\Pi_\theta$, sont des courbures de formes quadratiques différentes. La courbure CO est issue de l'intersection du deuxième plan central $\Pi0$ et d'un premier paraboloïde de révolution de foyer F0 et les différentes courbures Cθ sont respectivement issues de l'intersection des différents plans $\Pi\theta$ et de différents paraboloïdes de révolution de foyers respectifs Fθ. Dans le premier plan contenant l'ouverture rayonnante primaire, le premier réflecteur 10 a une première courbure parabolique définie en fonction de la position du premier foyer F2. Dans ce premier plan, une onde incidente rayonnée par l'ouverture primaire longiligne 11 est réfléchie par la première courbure du premier réflecteur 10 qui engendre une onde plane magnifiée c'est-à-dire que l'ouverture rayonnante totale du système optique hybride, en sortie du premier réflecteur, a une dimension D1 égale à la dimension de l'ouverture rayonnante primaire DO multipliée par le rapport de magnification M1, tel que M1= D1/DO. Le rapport de magnification M1 est également égal au rapport entre les distances séparant d'une part, le premier foyer F2 du centre Q du premier réflecteur 10 et d'autre part, le deuxième foyer F0 du premier foyer F2. Ce système optique hybride permet donc de contrôler le rapport de magnification M1 dans le premier plan par réglage des positions respectives des foyers F2 et F0, et par détermination des différentes courbures correspondantes du premier réflecteur, dans le premier plan et dans les deuxièmes plans, respectivement central et décalés d'un angle θ. Plus le foyer F2 est proche du foyer F0, plus le rapport de magnification M1 est grand. Néanmoins, pour qu'une ouverture rayonnante primaire longiligne permette de synthétiser plusieurs faisceaux, il est nécessaire qu'elle soit suffisamment éloignée du premier foyer F2. Dans ce cas, tout se passe comme si l'ouverture rayonnante primaire longiligne engendrait un front d'onde cylindrique, avec une faible courbure. Dans le cas où l'ouverture primaire engendre un front d'onde plan, le foyer F2 est positionné à l'infini.

Dans le deuxième plan central $\Pi_0$, perpendiculaire au plan de l'ouverture rayonnante primaire 11 et passant par le centre de l'ouverture rayonnante primaire, le premier réflecteur 10 comporte une deuxième courbure CO issue de l'intersection du deuxième plan central $\Pi0$ et d'un premier paraboloïde de révolution de foyer F0 situé au centre de l'ouverture primaire 11. Dans ce second plan central $\Pi_0$, l'ouverture rayonnante primaire 11 a une dimension négligeable par rapport à sa longueur dans le premier plan et l'onde émise par l'ouverture rayonnante est donc un front d'onde circulaire centré en F0 dans le plan considéré. Dans ce second plan central $\Pi_0$, le réflecteur 10 réfléchit un rayon issu du foyer F0 dans une direction parallèle à l'axe de symétrie, ou axe focal, de la deuxième courbure CO définie dans ce second plan central. De même, dans chaque plan $\Pi_\theta$ passant par un foyer Fθ situé sur l'ouverture rayonnante, le premier réflecteur 10 comporte une courbure Cθ issue de l'intersection du plan $\Pi_\theta$ correspondant et d'un paraboloïde de révolution de foyer Fθ. La courbure Cθ est une courbure de forme quadratique différente de la deuxième courbure CO. Dans chaque plan $\Pi_\theta$, le réflecteur 10 réfléchit un rayon issu du foyer Fθ dans une direction parallèle à l'axe de symétrie de la deuxième courbure CO définie dans le second plan.

Les différentes courbures du premier réflecteur 10 dans les différents plans sont définies de la façon décrite ci-après dans le cas d'un système optique hybride comportant un seul réflecteur ayant différentes courbures de formes quadratiques. Dans une première étape, la première courbure du premier réflecteur 10 est déterminée dans le premier plan XZ contenant l'ouverture rayonnante primaire. Ce premier plan peut, par exemple, être un plan d'offset, l'angle d'offset étant noté α. La première courbure CD du premier réflecteur 10 dans ce premier plan, est une parabole définie par la distance focale F. Comme illustré sur la figure 3, dans ce premier plan, est choisi un repère orthonormé, centré sur le foyer F2, et d'axes $X_\alpha$, et $Z_\alpha$, l'axe $Z_\alpha$ étant aligné avec l'axe de symétrie de la parabole, appelé droite directrice de la parabole. La parabole dans le premier plan est alors définie par l'équation suivante :

$$z_\alpha = -\frac{x_\alpha^2}{4.F} + F$$

Où $x_\alpha$ et $z_\alpha$ sont les coordonnées d'un point appartenant à la parabole. Cette parabole est une première courbure directrice CD tangente, au point P$\theta$, à toutes les courbures C$\theta$ du premier réflecteur définies dans les différents plans $\Pi_\theta$ perpendiculaires au plan XZ contenant l'ouverture rayonnante primaire longiligne, à partir de laquelle peut être élaborée la forme géométrique du premier réflecteur dans les trois directions de l'espace.

La distance entre les points F2 et un point P$\theta$ de la parabole est obtenue par l'équation suivante :

$$[F_2 P_\theta] = \frac{2.F}{1 + \cos(\alpha + \theta)}$$

La distance entre les points F2 et F0 étant notée FL, on en déduit la distance entre les points F$\theta$ et P$\theta$ dans le cas particulier d'une ouverture rayonnante primaire rectiligne:

$$[F_\theta P_\theta] = [F_2 P_\theta] - \frac{F_L}{\cos(\theta)}$$

Dans une deuxième étape, est déterminée l'équation de la deuxième courbure C$\theta$ du premier réflecteur dans un plan $\Pi_\theta$, perpendiculaire au premier plan et passant par un point P$\theta$. Le plan $\Pi_\theta$ passe par les foyers F2 et F$\theta$. Cette deuxième courbure C$\theta$ est située à l'intersection du plan $\Pi_\theta$ et du paraboloïde de révolution de foyer F$\theta$ et passant par un point P$\theta$ du premier réflecteur, le point P$\theta$ étant un point tangent à la courbure CD et au paraboloïde de révolution 14, comme illustré sur les figures 5a et 5b. Le paraboloïde de révolution 14 est défini par la distance focale Foc$\theta$, référencée sur la figure 4, qui constitue la droite directrice du paraboloïde de révolution. De façon que tous les rayons issus de l'ouverture rayonnante primaire 11 soient réfléchis dans des directions parallèles, la droite directrice du paraboloïde de révolution est parallèle à la droite directrice de la première courbure parabolique CD définie par la distance focale F et située dans le premier plan contenant l'ouverture rayonnante primaire 11.

La distance entre les points F$\theta$ et un point P$\theta$ du paraboloïde de révolution est obtenue par l'équation suivante :

$$[F_\theta P_\theta] = \frac{2.\text{Foc}_\theta}{1 + \cos(\alpha + \theta)}$$

On en déduit :

$$\text{Foc}_\theta = F - \frac{F_L.[1 + \cos(\alpha + \theta)]}{2.\cos(\theta)}$$

Une équation simple du paraboloïde de révolution 14 peut être obtenue en faisant un changement de repère, le nouveau repère ayant des axes X$\varphi$, Y$\varphi$, Z$\varphi$, et une origine située au point F$\theta$, l'axe Z$\varphi$ étant aligné avec la droite directrice du paraboloïde de révolution 14. Dans ce nouveau système de coordonnées, l'équation du paraboloïde de révolution 14 est la suivante :

$$\varphi = \alpha + \theta$$

$$z_\varphi = -\frac{x_\varphi^2}{4.\text{Foc}_\theta} - \frac{y_\varphi^2}{4.\text{Foc}_\theta} + \text{Foc}_\theta$$

Un nouveau changement de repère est réalisé par une rotation des axes $x_\varphi$ et $z_\varphi$ d'un angle $\varphi$ autour du point F$\theta$. Le nouveau repère, illustré sur la figure 4, comporte des axes X$\theta$, Y$\theta$, Z$\theta$, et est centré sur F$\theta$, Z$\theta$ étant aligné sur la direction F$\theta$P$\theta$. L'équation de la courbure C$\theta$, obtenue par l'intersection du paraboloïde de révolution avec le plan $\Pi_\theta$, correspondant au plan d'équation X$\theta$=0, s'écrit alors sous la forme quadratique suivante :

$$z_\theta.\cos(\varphi) = -\frac{(z_\theta.\sin(\varphi))^2}{4.\text{Foc}_\theta} - \frac{y_\theta^2}{4.\text{Foc}_\theta} + \text{Foc}_\theta$$

En faisant varier l'angle θ entre les deux valeurs extrêmes θ1 et θ2 correspondant aux deux extrémités opposées $F_{\theta 1}$ et $F_{\theta 2}$ de l'ouverture rayonnante longiligne, on obtient ainsi les équations des différentes courbures Cθ dans les plans $\Pi_\theta$ perpendiculaires au plan XZ contenant l'ouverture rayonnante primaire longiligne et correspondant à différentes valeurs de l'angle θ. Ces équations peuvent facilement être généralisées pour prendre en compte des ouvertures longilignes de forme quelconque, définies par exemple par une équation en coordonnées polaires dans un repère adéquat. La forme géométrique du premier réflecteur 10 dans les trois directions de l'espace est alors obtenue par concaténation des différentes courbures Cθ définies dans les différents plans $\Pi_\theta$, en suivant la courbure directrice CD définie dans le premier plan contenant l'ouverture rayonnante primaire longiligne et tangente à toutes les courbures Cθ. Cette définition du premier réflecteur permet de diminuer les aberrations de façon très importante car les différentes courbures Cθ obtenues à partir du paraboloïde de révolution 14 correspondant sont toutes localement, au point Pθ, tangentes à la courbure directrice CD définie dans le premier plan XZ contenant l'ouverture rayonnante primaire longiligne.

Dans un autre mode de réalisation de l'invention, comme représenté par exemple sur les figures 6a et 6b, le système optique hybride comporte un premier réflecteur 10 et une ouverture rayonnante primaire 11, de forme longiligne, illuminant le premier réflecteur 10 et comporte en outre un deuxième réflecteur 20, illuminé par le premier réflecteur 10, les premier et deuxième réflecteurs ayant un point focal F1 commun. Le deuxième réflecteur 20 est de dimensions plus importantes que le premier réflecteur 10 et a une ouverture rayonnante beaucoup plus importante que l'ouverture rayonnante primaire longiligne 11.

Les caractéristiques de l'ensemble constitué par le premier réflecteur 10 et l'ouverture rayonnante primaire 11 sont identiques aux caractéristiques décrites dans le premier mode de réalisation à l'exception des formes des différentes courbures du premier réflecteur 10 et par conséquent des directions des rayons réfléchis par le premier réflecteur 10. Ainsi, le premier réflecteur 10 du système optique peut comporter uniquement deux courbures différentes selon les deux plans orthogonaux XY et $\Pi_0$ ou alternativement, le premier réflecteur 10 peut comporter en outre plusieurs courbures Cθ différentes les unes des autres dans différents plans $\Pi_\theta$ perpendiculaires au plan XZ contenant l'ouverture rayonnante primaire 11. Ainsi, le premier réflecteur 10 comporte au moins deux courbures différentes selon deux plans orthogonaux, respectivement un premier plan XZ contenant l'ouverture rayonnante primaire 11 et un deuxième plan central $\Pi_0$ orthogonal au premier plan et passant par le centre F0 de l'ouverture rayonnante primaire 11. Dans le premier plan XZ contenant l'ouverture rayonnante primaire 11, le premier réflecteur 10 comporte une première courbure ayant un premier foyer F2, situé dans le premier plan, en arrière de l'ouverture rayonnante primaire 11. Dans le second plan central $\Pi_0$, perpendiculaire au plan de l'ouverture rayonnante primaire et passant par le centre F0 de l'ouverture rayonnante primaire, le premier réflecteur 10 comporte une deuxième courbure CO ayant un deuxième foyer F0 situé au centre de l'ouverture rayonnante primaire. Par ailleurs, dans différents plans $\Pi_\theta$ perpendiculaires au plan XZ contenant l'ouverture rayonnante primaire 11, chaque plan $\Pi_\theta$ passant par le foyer F2 et par l'un des différents points Fθ respectif, le premier réflecteur 10 peut comporter en outre des courbures Cθ différentes les unes des autres.

En outre, le premier réflecteur 10 comporte, un troisième foyer F1 localisé au foyer du deuxième réflecteur 20. Le troisième foyer F1 est situé dans le premier plan contenant l'ouverture rayonnante primaire 11. Pour que le premier réflecteur 10 comporte deux foyers différents situés dans chaque plan, les différentes courbures du premier réflecteur 10 dans le premier plan contenant l'ouverture rayonnante primaire 11, dans le second plan central $\Pi_0$ perpendiculaire à l'ouverture rayonnante primaire, et dans les différents plans $\Pi_\theta$, sont des courbures de formes elliptiques ou hyperboliques. Dans le cas où les courbures du premier réflecteur 10 sont elliptiques, le troisième foyer F1 est situé entre le premier réflecteur 10 et le deuxième réflecteur 20. Dans le cas où les courbures du premier réflecteur 10 sont hyperboliques, le troisième foyer F1 est situé en arrière du premier réflecteur 10 et est donc virtuel.

Les figures 7a et 7b illustrent deux vues partielles en coupe, selon un plan XZ contenant l'ouverture rayonnante primaire 11, d'un système optique hybride dans lequel les différentes courbures du premier réflecteur 10 sont elliptiques. Dans ce premier plan contenant l'ouverture rayonnante primaire 11, le premier réflecteur a une première courbure elliptique comportant deux foyers F1 et F2, les deux foyers étant situés sur le grand axe, noté $2a_\alpha$, de l'ellipse 17 correspondante comme représenté sur la figure 8. Dans ce premier plan, est choisi un repère orthonormé, centré sur le foyer F2, et d'axes $X_\alpha$, et $Z_\alpha$, l'axe $Z_\alpha$ étant aligné avec le grand axe 2a, de l'ellipse 17, l'angle α étant l'angle entre la ligne joignant les foyers F2 et F1 et la ligne joignant le foyer F2, le centre F0 de l'ouverture rayonnante primaire 11 et le centre Q du premier réflecteur 10. Le petit axe de l'ellipse étant noté $2b_\alpha$, $x_\alpha$ et $z_\alpha$ étant les coordonnées d'un point appartenant à l'ellipse 17, l'équation de l'ellipse 17 dans ce premier plan s'écrit :

$$\left(\frac{z_\alpha - c_\alpha}{a_\alpha}\right)^2 + \left(\frac{x_\alpha}{b_\alpha}\right)^2 = 1$$

Où $c_\alpha$, est la distance entre l'origine F2 du repère choisi et le centre O de l'ellipse 17. Les valeurs de $a_\alpha$, $b_\alpha$, $c_\alpha$ sont déterminées à partir des paramètres géométriques du système optique hybride à deux réflecteurs. Ces paramètres géométriques sont la distance Feq entre le point F2 et le centre F0 de l'ouverture rayonnante primaire 11, la distance d entre F0 et le centre Q du premier réflecteur 10 et la position du foyer F1 par rapport à F0, ladite position du foyer F1 étant définie par les coordonnées hx et hz selon deux directions X et Z respectivement orthogonale et parallèle à la ligne focale 18 reliant les foyers F2 et F0. Les valeurs de $a_\alpha$, $b_\alpha$, $c_\alpha$ sont alors définies par les équations suivantes :

$$\begin{cases} a_\alpha = \frac{1}{2}\left(F_{eq} + d + \sqrt{h_x^2 + (d - h_z)^2}\right) \\ c_\alpha = \frac{1}{2}\left(\frac{F_{eq} + h_z}{\cos \alpha}\right) \\ b_\alpha = \sqrt{a_\alpha^2 - c_\alpha^2} \end{cases}$$

Cette première courbure elliptique du premier réflecteur 10, définie dans le premier plan contenant l'ouverture rayonnante primaire 11, est une première courbure directrice tangente à toutes les deuxièmes courbures C0 et Cθ du premier réflecteur 10, définies dans les différents plans respectifs $\Pi_0$ et $\Pi_\theta$ perpendiculaires au premier plan contenant l'ouverture rayonnante primaire 11, à partir de laquelle peut être élaborée la forme géométrique du premier réflecteur 10 dans les trois directions de l'espace.

Dans le deuxième plan central $\Pi_0$ passant par le foyer F2 et par le point central F0 et dans les différents plans $\Pi_\theta$ orthogonaux au premier plan XZ contenant l'ouverture rayonnante primaire 11, chaque plan $\Pi_\theta$ passant par le foyer F2 et par l'un des différents points Fθ respectifs situés sur l'ouverture rayonnante primaire et distants du point central F0, le premier réflecteur 10 comporte différentes courbures elliptiques CO, Cθ. Les différentes courbures C0, Cθ du premier réflecteur dans les différents plans $\Pi_0$, $\Pi_\theta$ sont obtenues par l'intersection entre les différents plans $\Pi_0$, $\Pi_\theta$ respectifs et différents ellipsoïdes de révolution 15 passant par un point Pθ respectif du premier réflecteur, comme illustré sur la figure 9, chaque ellipsoïde de révolution 15 ayant chacun deux foyers respectifs F0 et F1 pour la deuxième courbure CO ou Fθ et F1 pour les différentes courbures Cθ. L'angle θ est défini comme l'angle entre le plan $\Pi_\theta$ correspondant et un plan $\Pi_0$ passant par les points F2 et le centre F0 de l'ouverture rayonnante primaire 11 ainsi que par le centre Q du premier réflecteur 10. Comme le montre la figure 10, pour chaque valeur de l'angle θ, le grand axe $2a_\theta$ de l'ellipsoïde de révolution 15 est orienté dans la direction FθF1, le petit axe $2b_\theta$ de l'ellipsoïde de révolution 15 est orienté dans une direction perpendiculaire à la direction FθF1. La deuxième courbure CO est obtenue pour une valeur de l'angle θ égal à zéro.

Dans un repère centré au point Fθ et d'axes Xφ, Yφ, Zφ, l'axe Zφ étant orienté dans la direction FθF1, l'angle φ étant l'angle entre les segments de droites FθF1 et FθPθ, l'équation de l'ellipsoïde de révolution 15 s'écrit :

$$\left(\frac{z_\varphi - c_\theta}{a_\theta}\right)^2 + \left(\frac{y_\varphi}{b_\theta}\right)^2 + \left(\frac{x_\varphi}{b_\theta}\right)^2 = 1$$

Un changement de repère est réalisé par une rotation des axes $x_\varphi$ et $z_\varphi$ d'un angle φ autour du point Fθ. Le nouveau repère comporte des axes Xθ, Yθ, Zθ, et est centré sur Fθ, Zθ étant aligné sur la direction FθPθ. Dans l'hypothèse d'une ouverture rayonnante rectiligne, l'équation de la courbure elliptique Cθ, obtenue par l'intersection de l'ellipsoïde de révolution 15 avec le plan $\Pi_\theta$, correspondant au plan d'équation Xθ=0, s'écrit alors :

$$\left(\frac{z_\theta . \cos(\varphi) - c_\theta}{a_\theta}\right)^2 + \left(\frac{y_\theta}{b_\theta}\right)^2 + \left(\frac{z_\theta . \sin(\varphi)}{b_\theta}\right)^2 = 1$$

Avec :

$$\begin{cases} a_\theta = a_\alpha - \frac{F_{eq}}{2\cos\theta} \\ c_\theta = \frac{1}{2}\sqrt{h_z^2 + \left(h_x - F_{eq}\tan\theta\right)^2} \\ b_\theta = \sqrt{a_\theta^2 - c_\theta^2} \end{cases}$$

Et

$$\varphi = \tan^{-1}\left(\frac{h_x - F_{eq}\tan\theta}{h_z}\right) - \theta$$

En faisant varier l'angle θ entre les deux valeurs extrêmes θ1 et θ2 correspondant aux deux extrémités opposées $F_{\theta 1}$ et $F_{\theta 2}$ de l'ouverture rayonnante primaire 11, on obtient ainsi les équations des différentes courbures elliptiques Cθ du premier réflecteur 10 dans les différents plans $\Pi_\theta$ perpendiculaires au premier plan contenant l'ouverture rayonnante primaire longiligne et correspondant à différentes valeurs de l'angle θ. Ces équations peuvent facilement être généralisées pour prendre en compte des ouvertures longilignes de forme quelconques, définies par exemple par une équation en coordonnées polaires dans un repère adéquat. La forme géométrique du premier réflecteur 10 dans les trois directions de l'espace est alors obtenue par concaténation des différentes courbures Cθ, issues de l'intersection du plan $\Pi_\theta$ et des différents ellipsoides de révolution 15 de foyers Fθ et F1, en suivant la courbure directrice CD, de forme elliptique, de foyers F2 et F1, définie dans le premier plan contenant l'ouverture rayonnante primaire 11, cette courbure directrice CD étant tangente, au point Pθ, à toutes les courbures Cθ définies dans les différents plans $\Pi_\theta$ perpendiculaires au premier plan XZ contenant l'ouverture rayonnante primaire longiligne.

Dans un autre mode de réalisation de l'invention, au lieu d'utiliser un premier réflecteur ayant des courbures elliptiques, il est possible d'utiliser un premier réflecteur ayant des courbures hyperboliques comme représenté sur les figures 11a et 11b. Dans ce cas, le troisième foyer F1 est virtuel et situé en arrière du premier réflecteur 10.

Le deuxième réflecteur 20 peut avoir une seule courbure parabolique comportant un seul foyer F1, ou avoir une double courbure parabolique selon deux plans orthogonaux pour, outre le foyer F1, obtenir un autre point de focalisation. Le deuxième réflecteur peut également avoir une surface réfléchissante conformée.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention tel que défini dans les revendications. Notamment, les formulations mathématiques, dérivées de l'optique géométrique, permettent de définir une géométrie de référence ayant les propriétés voulues, mais il est possible de conformer la surface géométrique du premier réflecteur ainsi obtenue en utilisant des algorithmes d'optimisation adaptés afin d'améliorer davantage les performances. En particulier, dans le cas ou l'on souhaite empiler des ouvertures rayonnantes selon l'axe orthogonal au plan XZ contenant ces ouvertures rayonnantes, cela permet alors d'obtenir une couverture multifaisceaux bi-dimensionnelle. Il est également possible de conformer la surface du deuxième réflecteur pour améliorer les performances notamment pour limiter les aberrations de phase pour les faisceaux les plus dépointés.

## Revendications

1. Système optique d'antenne comportant au moins un premier réflecteur (10) et une ouverture rayonnante primaire (11) illuminant le premier réflecteur, l'ouverture rayonnante primaire (11) ayant une forme longiligne s'étendant dans un premier plan (XZ), le premier réflecteur comportant au moins deux courbures différentes (CD, C0) selon deux plans orthogonaux correspondant respectivement au premier plan (XZ) et à un deuxième plan central ($\Pi_0$) coupant l'ouverture rayonnante primaire en un premier point d'intersection situé en un point central de l'ouverture rayonnante primaire, le système optique étant tel que, dans le premier plan (XZ) contenant l'ouverture rayonnante primaire, la première courbure (CD) du premier réflecteur (10) définit un premier foyer (F2) localisé en arrière de l'ouverture rayonnante primaire (11) ledit premier foyer (F2) étant contenu dans le plan central $\Pi_0$, et en ce que dans le deuxième plan central $\Pi_0$, la deuxième courbure (C0) du premier réflecteur (10) définit à elle seule, dans le premier plan (XZ), un deuxième foyer (F0) différent du premier foyer (F2), situé au point central de l'ouverture rayonnante primaire (11), **caractérisé en ce que**, pour différents plans $\Pi_\theta$ perpendiculaires au premier plan (XZ) contenant l'ouverture rayonnante primaire (11), chaque plan $\Pi_\theta$ étant obtenu par une rotation du deuxième plan central $\Pi_0$, d'un angle θ donné et incluant le premier foyer (F2), les différents plans $\Pi_\theta$ coupant l'ouverture rayonnante primaire en différents points d'intersection respectifs, distants du deuxième foyer (F0), le premier réflecteur (10) comporte en outre, dans chaque plan $\Pi_\theta$, une courbure donnée (Cθ), différentes de la deuxième courbure (C0), et **en ce que** dans les différents plans $\Pi_\theta$, les différentes courbures (Cθ) du premier réflecteur (10) définissent différents foyers (Fθ) respectivement situés aux différents points d'intersection entre lesdits différents plans $\Pi_\theta$ et l'ouverture rayonnante primaire .

2. Système optique selon la revendication 1, **caractérisé en ce que** dans le premier plan contenant l'ouverture rayonnante primaire (11), l'ouverture rayonnante primaire est placée dans une position d'offset par rapport au premier réflecteur (10), et **en ce que** dans le second plan central $\Pi_0$, perpendiculaire au premier plan contenant l'ouverture rayonnante primaire, l'ouverture rayonnante primaire (11) est placée dans un plan de symétrie du premier réflecteur (10).

3. Système optique selon la revendication 1, **caractérisé en ce que** dans le premier plan contenant l'ouverture rayonnante primaire (11), l'ouverture rayonnante primaire est placée dans un plan de symétrie du premier réflecteur (10), et **en ce que** dans le second plan central $\Pi_0$, perpendiculaire au premier plan contenant l'ouverture rayonnante primaire, l'ouverture rayonnante primaire (11) est placée dans une position d'offset par rapport au premier réflecteur (10).

4. Système optique selon la revendication 1, **caractérisé en ce que** la première courbure (CD) du premier réflecteur (10) selon le premier plan contenant l'ouverture rayonnante primaire (11) est une première courbure parabolique ayant un foyer correspondant au premier foyer (F2), la deuxième courbure (C0) du premier réflecteur (10) selon le deuxième plan central $\Pi_0$ perpendiculaire au premier plan contenant l'ouverture rayonnante primaire (11), est issue de l'intersection du deuxième plan central $\Pi_0$ et d'un premier paraboloïde de révolution (14) ayant un foyer correspondant au deuxième foyer (F0), et les différentes courbures (C$\theta$) du premier réflecteur (10) selon les différents plans $\Pi_\theta$ perpendiculaires au premier plan contenant l'ouverture rayonnante primaire (11) et coupant l'ouverture rayonnante primaire aux différents points d'intersection respectifs, sont issues de l'intersection des différents plans $\Pi_\theta$ et de différents paraboloïdes de révolution (14) ayant chacun un foyer correspondant aux différents foyers respectifs (F$\theta$).

5. Système optique selon la revendication 1, **caractérisé en ce qu'**il comporte en outre un deuxième réflecteur (20) illuminé par le premier réflecteur (10), les premier et deuxième réflecteurs étant confocaux, et **en ce que**, dans le premier plan contenant l'ouverture rayonnante primaire (11), dans le second plan $\Pi_0$ et dans chaque plan $\Pi_\theta$ perpendiculaire au premier plan contenant l'ouverture rayonnante primaire, le premier réflecteur (10) comporte en outre un troisième foyer (F1), le troisième foyer (F1) étant un foyer commun au premier réflecteur (10) et au deuxième réflecteur (20).

6. Système optique selon la revendication 5, **caractérisé en ce que** la première courbure (CD) du premier réflecteur (10) est une première courbure elliptique ayant deux foyers correspondant respectivement au premier foyer (F2) et au troisième foyer (F1), **en ce que** la deuxième courbure (C0) du premier réflecteur (10) est issue de l'intersection du deuxième plan central $\Pi_0$ et d'un premier ellipsoïde de révolution (15) ayant deux foyers correspondant respectivement au deuxième foyer (F0) et au troisième foyer (F1), et **en ce que** les différentes courbures (C$\theta$) du premier réflecteur (10) selon les différents plans $\Pi_\theta$ perpendiculaires au premier plan contenant l'ouverture rayonnante primaire (11) et coupant l'ouverture rayonnante primaire aux différents points d'intersection respectifs, sont issues de l'intersection des différents plans $\Pi_\theta$ et de différents ellipsoïdes de révolution (15) ayant deux foyers correspondant respectivement au troisième foyer (F1) et aux différents foyers respectifs (F$\theta$).

7. Système optique selon la revendication 5, **caractérisé en ce que** les différentes courbures du premier réflecteur (10) selon le premier plan contenant l'ouverture rayonnante primaire (11), selon le second plan perpendiculaire au premier plan contenant l'ouverture rayonnante primaire (11) et selon les différents plans $\Pi_\theta$ perpendiculaires au premier plan contenant l'ouverture rayonnante primaire (11) et coupant l'ouverture rayonnante primaire aux différents points d'intersection respectifs, sont respectivement une courbure hyperbolique et une courbure obtenue de l'intersection des différents plans $\Pi_\theta$ et de différents hyperboloïdes de révolution ayant deux foyers correspondant respectivement au troisième foyer (F1) et aux différents foyers respectifs (F$\theta$).

8. Système optique selon l'une des revendications 1 à 7, **caractérisé en ce que** l'ouverture rayonnante primaire (11) a une forme linéaire ou une forme en arc de cercle ayant un centre correspondant au premier foyer (F2).

9. Système optique selon l'une des revendications 1 à 8, **caractérisé en ce qu'**il comporte en outre un dispositif de déphasage (35) couplé à l'ouverture rayonnante primaire (11).

10. Système optique selon la revendication 9, **caractérisé en ce qu'**il comporte en outre un formateur de faisceaux quasi-optique planaire (30) constitué d'une ligne de transmission à deux plaques métalliques parallèles, le formateur de faisceaux quasi-optique comportant une ouverture d'extrémité terminale formant l'ouverture rayonnante primaire (11).

11. Système optique selon la revendication 9, **caractérisé en ce que** le dispositif de déphasage est constitué d'une lentille (33) intégrée entre les deux plaques métalliques parallèles d'un formateur de faisceaux quasi-optique (30).

**Patentansprüche**

1. Optisches Antennensystem, aufweisend mindestens einen ersten Reflektor (10) und eine primäre strahlende Öffnung (11), die den ersten Reflektor beleuchtet, wobei die primäre strahlende Öffnung (11) eine langgliedrige Form aufweist, die sich in einer ersten Ebene (XZ) erstreckt, wobei der erste Reflektor mindestens zwei verschiedene Krümmungen (CD, C0) entlang zwei orthogonalen Ebenen aufweist, die jeweils der ersten Ebene (XZ) und einer zweiten mittleren Ebene ($\Pi_0$) entsprechen, die die primäre strahlende Öffnung in einem ersten Schnittpunkt schneidet, der sich in einem Mittelpunkt der primären strahlenden Öffnung befindet, wobei das optische System derart ist, dass in der ersten Ebene (XZ), die die primäre strahlende Öffnung enthält, die erste Krümmung (CD) des ersten Reflektors (10) einen ersten Brennpunkt (F2) definiert, der sich hinter der primären strahlenden Öffnung (11) befindet, wobei der erste Brennpunkt (F2) in der mittleren Ebene $\Pi_0$ enthalten ist, und derart, dass in der zweiten mittleren Ebene $\Pi_0$ die zweite Krümmung (C0) des ersten Reflektors (10) selber in der ersten Ebene (XZ) einen zweiten Brennpunkt (F0) definiert, der sich von dem ersten Brennpunkt (F2) unterscheidet und der sich im Mittelpunkt der primären strahlenden Öffnung (11) befindet,

   **dadurch gekennzeichnet, dass**, bei verschiedenen Ebenen $\Pi_\theta$, die senkrecht zur ersten Ebene (XZ) sind, die die primäre strahlende Öffnung (11) enthält, wobei jede Ebene $\Pi_\theta$ durch eine Drehung der zweiten mittleren Ebene $\Pi_0$ um einen gegebenen Winkel $\theta$ erhalten wird, der den ersten Brennpunkt (F2) einschließt, wobei die verschiedenen Ebenen $\Pi_\theta$ die primäre strahlende Öffnung in verschiedenen jeweiligen Schnittpunkten schneiden, die von dem zweiten Brennpunkt (F0) entfernt sind, der erste Reflektor (10) ferner in jeder Ebene $\Pi_\theta$ eine gegebene Krümmung ($C\theta$) aufweist, die von der zweiten Krümmung (C0) verschieden ist, und dass in den verschiedenen Ebenen $\Pi_\theta$ die verschiedenen Krümmungen ($C\theta$) des ersten Reflektors (10) verschiedene Brennpunkte ($F\theta$) definieren, die sich jeweils an verschiedenen Schnittpunkten zwischen den verschiedenen Ebenen $\Pi_\theta$ und der primären strahlenden Öffnung befinden.

2. Optisches System nach Anspruch 1, **dadurch gekennzeichnet, dass** in der ersten Ebene, die die primäre strahlende Öffnung (11) enthält, die primäre strahlende Öffnung in einer Position versetzt in Bezug auf den ersten Reflektor (10) platziert ist, und dass in der zweiten mittleren Ebene $\Pi_0$, senkrecht zur ersten Ebene, die die primäre strahlende Öffnung enthält, die primäre strahlende Öffnung (11) in einer Symmetrieebene des ersten Reflektors (10) platziert ist.

3. Optisches System nach Anspruch 1, **dadurch gekennzeichnet, dass** in der ersten Ebene, die die primäre strahlende Öffnung (11) enthält, die primäre strahlende Öffnung in einer Symmetrieebene des ersten Reflektors (10) platziert ist, und dass in der zweiten mittleren Ebene $\Pi_0$, senkrecht zur ersten Ebene, die die primäre strahlende Öffnung enthält, die primäre strahlende Öffnung (11) in einer Position versetzt in Bezug auf den ersten Reflektor (10) platziert ist.

4. Optisches System nach Anspruch 1, **dadurch gekennzeichnet, dass** die erste Krümmung (CD) des ersten Reflektors (10) entlang der ersten Ebene, die die primäre strahlende Öffnung (11) enthält, eine erste parabolische Krümmung ist, die einen Brennpunkt entsprechend dem ersten Brennpunkt (F2) aufweist, wobei die zweite Krümmung (C0) des ersten Reflektors (10) entlang der zweiten mittleren Ebene $\Pi_0$ senkrecht zur ersten Ebene, die die primäre strahlende Öffnung (11) enthält, aus der Schnittstelle der zweiten mittleren Ebene $\Pi_0$ und einem ersten Rotationsparaboloid (14), das einen dem zweiten Brennpunkt (F0) entsprechenden Brennpunkt aufweist, hervorgeht, und wobei die verschiedenen Krümmungen ($C\theta$) des ersten Reflektors (10) entlang der verschiedenen Ebenen $\Pi_\theta$ senkrecht zur ersten Ebene, die die primäre strahlende Öffnung (11) enthält und die primäre strahlende Öffnung an verschiedenen jeweiligen Schnittpunkten schneidet, aus der Schnittstelle der verschiedenen Ebenen $\Pi_\theta$ und von verschiedenen Rotationsparaboloiden (14), die jeweils einen den verschiedenen jeweiligen Brennpunkten ($F\theta$) entsprechenden Brennpunkt aufweisen, hervorgehen.

5. Optisches System nach Anspruch 1, **dadurch gekennzeichnet, dass** es ferner einen zweiten Reflektor (20) aufweist, der von dem ersten Reflektor (10) beleuchtet wird, wobei der erste und der zweite Reflektor konfokal sind, und dass in der ersten Ebene, die die primäre strahlende Öffnung (11) enthält, in der zweiten Ebene $\Pi_0$ und in jeder Ebene $\Pi_\theta$ senkrecht zu der ersten Ebene, die die primäre strahlende Öffnung enthält, der erste Reflektor (10) ferner einen dritten Brennpunkt (F1) aufweist, wobei der dritte Brennpunkt (F1) ein gemeinsamer Brennpunkt mit dem ersten Reflektor (10) und dem zweiten Reflektor (20) ist.

6. Optisches System nach Anspruch 5, **dadurch gekennzeichnet, dass** die erste Krümmung (CD) des ersten Reflektors (10) eine erste elliptische Krümmung ist, die zwei Brennpunkte aufweist, die jeweils dem ersten Brennpunkt (F2) und dem dritten Brennpunkt (F1) entsprechen, dass die zweite Krümmung (C0) des ersten Reflektors (10) aus der Schnittstelle der zweiten mittleren Ebene $\Pi_0$ und einem ersten Rotationsellipsoid (15), das zwei Brennpunkte aufweist, die jeweils dem zweiten Brennpunkt (F0) und dem dritten Brennpunkt (F1) entsprechen, hervorgeht, und dass die verschiedenen Krümmungen (Cθ) des ersten Reflektors (10) entlang der verschiedenen Ebenen $\Pi_\theta$ senkrecht zur ersten Ebene, die die primäre strahlende Öffnung (11) enthält und die primäre strahlende Öffnung an verschiedenen jeweiligen Schnittpunkten schneidet, aus der Schnittstelle der verschiedenen Ebenen $\Pi_\theta$ und von verschiedenen Rotationsellipsoiden (15), die zwei jeweils dem dritten Brennpunkt (F1) und den verschiedenen jeweiligen Brennpunkten (Fθ) entsprechende Brennpunkte aufweisen, hervorgehen.

**7.** Optisches System nach Anspruch 5, **dadurch gekennzeichnet, dass** die verschiedenen Krümmungen des ersten Reflektors (10) entlang der ersten Ebene, die die primäre strahlende Öffnung (11) enthält, entlang der zweiten Ebene senkrecht zur ersten Ebene, die die primäre strahlende Öffnung (11) enthält, und entlang der verschiedenen Ebenen $\Pi_\theta$ senkrecht zur ersten Ebene, die die primäre strahlende Öffnung (11) enthält und die primäre strahlende Öffnung an verschiedenen jeweiligen Schnittpunkten schneidet, jeweils eine hyperbolische Krümmung und eine Krümmung sind, die durch die Schnittstelle der verschiedenen Ebenen $\Pi_\theta$ und von verschiedenen Rotationshyperboloiden, die zwei jeweils dem dritten Brennpunkt (F1) und den verschiedenen jeweiligen Brennpunkten (Fθ) entsprechende Brennpunkte aufweisen, erhalten werden.

**8.** Optisches System nach einem der Ansprüche 1 bis 7, **dadurch gekennzeichnet, dass** die primäre strahlende Öffnung (11) eine geradlinige oder eine kreisbogenförmige Form mit einer dem ersten Brennpunkt (F2) entsprechenden Mitte aufweist.

**9.** Optisches System nach einem der Ansprüche 1 bis 8, **dadurch gekennzeichnet, dass** es ferner eine Phasenregelungsvorrichtung (35) aufweist, die an die primäre strahlende Öffnung (11) gekoppelt ist.

**10.** Optisches System nach Anspruch 9, **dadurch gekennzeichnet, dass** es ferner eine Einrichtung zum Bilden von quasioptischen planaren Strahlen (30) aufweist, die aus einer Übertragungsleitung mit zwei parallelen Metallplatten besteht, wobei die Einrichtung zum Bilden von quasioptischen Strahlen eine abschließende Endöffnung aufweist, die die primäre strahlende Öffnung (11) bildet.

**11.** Optisches System nach Anspruch 9, **dadurch gekennzeichnet, dass** die Phasenregelungsvorrichtung aus einer Linse (33) besteht, die zwischen den beiden parallelen Metallplatten einer Einrichtung zum Bilden von quasioptischen Strahlen (30) integriert ist.

**Claims**

**1.** An optical antenna system having at least a first reflector (10) and a primary radiating opening (11) which illuminates the first reflector, the primary radiating opening (11) having a slender form which extends in a first plane (XZ), the first reflector having at least two different curves (CD, C0) along two orthogonal planes which correspond respectively to the first plane (XZ) and a second centre plane ($\Pi_0$) which intersects with the primary radiating opening at a first intersection point located at a central point of the primary radiating opening, the optical system being such that, in the first plane (XZ) which contains the primary radiating opening, the first curve (CD) of the first reflector (10) defines a first focal point (F2) which is located at the rear of the primary radiating opening (11), the first focal point (F2) being contained in the centre plane $\Pi_0$, and in that in the second centre plane $\Pi_0$ the second curve (C0) of the first reflector (10) alone defines, in the first plane (XZ), a second focal point (F0) which is different from the first focal point (F2), which is located at the central point of the primary radiating opening (11),
**characterised in that**, for different planes $\Pi_\theta$ which are perpendicular to the first plane (XZ) which contains the primary radiating opening (11), each plane $\Pi_\theta$ being obtained by a rotation of the second centre plane $\Pi_0$ by a given angle θ and including the first focal point (F2), the different planes $\Pi_\theta$ intersecting with the primary radiating opening at different intersection points, respectively, which are remote from the second focal point (F0), the first reflector (10) further comprises, in each plane $\Pi_\theta$, a given curve (Cθ) which is different from the second curve (C0), and **in that** in the different planes $\Pi_\theta$, the different curves (Cθ) of the first reflector (10) define different focal points (Fθ) which are located at the different intersection points, respectively, between the different planes $\Pi_\theta$ and the primary radiating opening.

**2.** The optical system according to claim 1, **characterised in that**, in the first plane which contains the primary radiating opening (11), the primary radiating opening is placed in an offset position relative to the first reflector (10), and **in that**, in the second centre plane $\Pi_0$ which is perpendicular to the first plane which contains the primary radiating opening, the primary radiating opening (11) is placed in a plane of symmetry of the first reflector (10).

3. The optical system according to claim 1, **characterised in that**, in the first plane which contains the primary radiating opening (11), the primary radiating opening is placed in a plane of symmetry of the first reflector (10), and **in that**, in the second centre plane $\Pi_0$ which is perpendicular to the first plane which contains the primary radiating opening, the primary radiating opening (11) is placed in an offset position relative to the first reflector (10).

4. The optical system according to claim 1, **characterised in that** the first curve (CD) of the first reflector (10) along the first plane which contains the primary radiating opening (11) is a first parabolic curve which has a focal point which corresponds to the first focal point (F2), the second curve (C0) of the first reflector (10) along the second centre plane $\Pi_0$ which is perpendicular to the first plane which contains the primary radiating opening (11) results from the intersection of the second centre plane $\Pi_0$ and a first paraboloid (14) of revolution which has a focal point corresponding to the second focal point (F0), and the different curves (Cθ) of the first reflector (10) along the different planes $\Pi_\theta$ which are perpendicular to the first plane which contains the primary radiating opening (11) and which intersects with the primary radiating opening at the different intersection points, respectively, result from the intersection of the different planes $\Pi_\theta$ and different paraboloids (14) of revolution which each have a focal point which corresponds to the different focal points (Fθ), respectively.

5. The optical system according to claim 1, **characterised in that** it further has a second reflector (20) which is illuminated by the first reflector (10), the first and second reflectors being confocal, and **in that**, in the first plane which contains the primary radiating opening (11), in the second plane $\Pi_0$ and in each plane $\Pi_\theta$ which is perpendicular to the first plane which contains the primary radiating opening, the first reflector (10) further has a third focal point (F1), the third focal point (F1) being a common focal point to the first reflector (10) and the second reflector (20).

6. The optical system according to claim 5, **characterised in that** the first curve (CD) of the first reflector (10) is a first elliptical curve which has two focal points which correspond to the first focal point (F2) and the third focal point (F1), respectively, **in that** the second curve (C0) of the first reflector (10) results from the intersection of the second centre plane $\Pi_0$ and a first ellipsoid (15) of revolution which has two focal points which correspond to the second focal point (F0) and the third focal point (F1), respectively, and **in that** the different curves (Cθ) of the first reflector (10) along the different planes $\Pi_\theta$ which are perpendicular to the first plane which contains the primary radiating opening (11) and which intersects with the primary radiating opening at the different intersection points, respectively, result from the intersection of the different planes $\Pi_\theta$ and different ellipsoids (15) of revolution which have two focal points which correspond to the third focal point (F1) and the different focal points (Fθ), respectively.

7. The optical system according to claim 5, **characterised in that** the different curves of the first reflector (10) along the first plane which contains the primary radiating opening (11) along the second plane which is perpendicular to the first plane which contains the primary radiating opening (11) and along the different planes $\Pi_\theta$ which are perpendicular to the first plane which contains the primary radiating opening (11) and which intersects with the primary radiating opening at the different intersection points, respectively, are a hyperbolic curve and a curve which is obtained from the intersection of the different planes $\Pi_\theta$ and different hyperboloids of revolution which have two focal points which correspond to the third focal point (F1) and the different focal points (Fθ), respectively.

8. The optical system according to any one of claims 1 to 7, **characterised in that** the primary radiating opening (11) has a linear form or a circular-arc-like form having a centre which corresponds to the first focal point (F2).

9. The optical system according to any one of claims 1 to 8, **characterised in that** it further has a phase-shifting device (35) which is coupled to the primary radiating opening (11).

10. The optical system according to claim 9, **characterised in that** it further has a quasi-optical planar beam shaper (30) which is constituted by a transmission line with two parallel metal plates, the quasi-optical beam shaper having a terminal end opening which forms the primary radiating opening (11).

11. The optical system according to claim 9, **characterised in that** the phase shifting device is constituted by a lens (33) which is integrated between the two parallel metal plates of a quasi-optical beam shaper (30).

FIG.1a

FIG.1b

FIG.1c

FIG.1d

FIG.1e

FIG.2a

FIG.2b

FIG.2c

FIG.2d

FIG.3

FIG.4

FIG.5a

FIG.5b

FIG.6a

FIG.6b

FIG.7a

FIG.7b

FIG.8

FIG.9

FIG.10

FIG.11a

FIG.11b

**RÉFÉRENCES CITÉES DANS LA DESCRIPTION**

**Documents brevets cités dans la description**

- US 4618867 A
- US 5202700 A
- US 2010060521 A1